# EUROPÄISCHE PATENTANMELDUNG

(11) **EP 4 032 626 A1**
(43) Veröffentlichungstag der Anmeldung: **27.07.2022**
(21) Anmeldenummer: 21152807.0
(22) Anmeldetag: 21.01.2021
(51) Int. Cl.: B07B 1/38, B07B 1/42, F16H 7/08, F16H 7/12

(54) **ANTRIEB FÜR PLANSICHTER ODER VERGLEICHBARE SORTIERMASCHINE**

(71) Anmelder: Bühler AG, 9240 Uzwil (CH)
(72) Erfinder: Thillen, Fred, 8050 Zürich (CH); Gong, Xiaochun, Liangxi District, Wuxi City Jiangsu Province (CN); Moosmann, Jürgen, 88276 Berg (DE)
(74) Vertreter: Hepp Wenger Ryffel AG

(57) **Zusammenfassung**

Die vorliegende Erfindung betrifft einen Antrieb (4) für einen Plansichter oder eine vergleichbare Sortiermaschine zum Sichten beziehungsweise Sieben von mehlförmigen oder granularen Produkten, umfassend einen Motor (4a) sowie zwei Antriebsscheiben (4b, 4c), wobei der Motor (4a) operativ mit einer Antriebsscheibe (4c) verbunden ist, eine Antriebsscheibe (4b) operativ mit einer Schwungmasse (4h) verbunden ist, und die Antriebsscheiben (4b, 4c) über einen Antriebsriemen (4d) operativ miteinander verbunden sind, **dadurch gekennzeichnet, dass** der der Antrieb (4) weiterhin eine selbstspannende Spannrolle (4e, 4f, 4g) zum Spannen des Antriebsriemens (4d) umfasst.

## Beschreibung

Die vorliegende Erfindung betrifft einen Antrieb für einen Plansichter oder eine vergleichbare Sortiermaschine zum Sichten beziehungsweise Sieben von mehlförmigen oder granularen Produkten.

Plansichter zum Sichten von mehlförmigen oder granularen Produkten in Mühlen, insbesondere in Getreidemühlen sind weit verbreitet. Sie weisen ein verschliessbares Siebmodul mit mindestens einem Stapel übereinander angeordneter Siebböden auf, deren Bespannung von oben nach unten mit abnehmender Maschenweite versehen ist, so dass Produkte gleicher Partikelgrössenbereiche zusammengeführt werden können. Zur Ausführung der Siebbewegung wird der Plansichter mittels eines Unwuchtantriebes in eine gleichmässig schwingende Bewegung versetzt.

Im Stand der Technik wurden üblicherweise mehrere Siebmodule in gerader Anzahl in zwei Reihen angeordnet, wobei zwischen den beiden Reihen ein Antrieb angeordnet wurde, wie dies zum Beispiel in der DE- 2 256 307 A1 beschrieben wurde. Weiterhin bekannt sind aus der EP-A-1 396 289 A1 Anordnungen von zwei Viererblocks von Siebmodule mit dazwischen liegender Antriebseinheit.

Um den Raum im Antriebsabteil besser zu nutzen, wurde auch vorgeschlagen, Siebmodule an dessen Enden anzuordnen und so eine geschlossene Ringanordnung von Siebmodulen auszubilden (DE-C-197678). Nachteilig sind bei dieser Variante neben der schlechten Zugänglichkeit des Antriebes auch ungleiche Bewegungsverhältnisse.

Bei allen vorstehend beschriebenen Varianten aus dem Stand der Technik können zudem nur geradzahlige Vielfache an Siebmodulen zu einem Plansichter arrangiert werden.

In der WO 2008/089589 A1 ist ein verbesserter Plansichter vorgeschlagen worden, bei welchem jedes Siebmodul einen eigenen Antrieb aufweist. Somit kann die verfügbare Grundfläche besser ausgenutzt und die Sichtkapazität besser an den tatsächlichen Bedarf angepasst werden. Gemäss der WO 2008/089589 A1 sind Plansichter mit einer ungeraden Anzahl von Siebmodulen realisierbar. Der aus mindestens einem Siebmodul gebildete Plansichter gemäss der WO 2008/089589 A1 ist in üblicher Weise an flexiblen Stäben an der Decke eines Siebbodens frei schwingend aufgehängt.

Der Antrieb besteht aus ringförmig angeordneten Zahnscheiben und diesen am Aussenring zugeordneten Spulen. Es handelt sich um einen Reluktanzmotor, bei welchem ein zumindest teilweise metallischer Rotor (eine Zahnscheibe) mit Hilfe elektromagnetischer Spulen in Bewegung versetzt wird. Der Antrieb ist sowohl im Deckenbereich als auch im Bodenbereich des Plansichters angeordnet. Innerhalb der Zahnscheiben sind Einlass- und Auslassöffnungen für das zu sichtende Produkt angeordnet.

In der EP-2 656 927 A1 ist ein Plansichter beschrieben, bei welchem das Gehäuse mittels einer Mehrzahl von Stäben auf einer Oberfläche aufgestellt ist. Die Stäbe sind mit dem Gehäuse wirkverbunden. Das Gehäuse wird durch einen im Deckenbereich vorgesehenen, nicht näher beschriebenen ringförmigen Antrieb in schwingende Bewegungen versetzt. Innerhalb des ringförmigen Antriebs ist eine Einlassöffnung für das zu sichtende Produkt angeordnet.

Die vorstehend beschriebenen Plansichter aus dem Stand der Technik sind noch nicht optimal.

Es war die Aufgabe der vorliegenden Erfindung, einen Antrieb für einen Plansichter oder eine vergleichbare Sortiermaschine zum Sichten beziehungsweise Sieben von mehlförmigen oder granularen Produkten bereitzustellen, welcher die Nachteile des vorstehend beschriebenen Stands der Technik überwindet.

Die vorstehende Aufgabe wird durch den erfindungsgemässen Plansichter gemäss Anspruch 1 gelöst.

Die vorliegende Erfindung betrifft einen Antrieb für einen Plansichter oder eine vergleichbare Sortiermaschine zum Sichten beziehungsweise Sieben von mehlförmigen oder granularen Produkten, umfassend einen Motor sowie zwei Antriebsscheiben, wobei der Motor operativ mit einer Antriebsscheibe verbunden ist, eine Antriebsscheibe operativ mit einer Schwungmasse verbunden ist, und die Antriebsscheiben über einen Antriebsriemen operativ miteinander verbunden sind, dadurch gekennzeichnet, dass der Antrieb weiterhin eine selbstspannende Spannrolle zum Spannen des Antriebsriemens umfasst.

Gemäss der vorliegenden Erfindung umfasst der Antrieb eine selbstspannende Spannrolle zum Spannen des Antriebsriemens. Auf diese Weise wird ein Über- oder Unterspannen des Antriebsriemens verhindert. Vorzugsweise wird eine Federspannung verwendet. Unter einer selbstspannenden Spannrolle wird erfindungsgemäss eine Spannrolle verstanden, welche nicht manuell (beispielsweise mittels eines Exzenters) gespannt werden muss.

Gemäss einer bevorzugten Ausführungsform ist die selbstspannende Spannrolle über einen Hebel mit einer Spannfeder verbunden. Durch die selbstspannende Spannrolle kann weiterhin der Umschlingungswinkel der kleinen Antriebsscheibe erhöht werden. Dadurch wird die Effizienz des Riemenantriebs erhöht, und als Konsequenz kann ein kleinerer Motor benutzt werden. Somit kann das Gewicht des gesamten Plansichters verringert werden.

Ein weiterer Vorteil einer bevorzugten Ausführungsform des erfindungsgemässen Antriebs besteht darin, dass die Zuführung für zu sichtendes Produkt durch den Antrieb geführt ist. Besonders bevorzugt ist die Zuführung für zu sichtendes Produkt durch eine Öffnung im oberen Bereich einer nachstehend beschriebenen Klammer des Gerüsts, falls vorhanden, zur Öffnung in der Mitte der Antriebsscheibe bis zum Produkteinlass im Deckel des Siebmoduls vorgesehen ist.

Vorzugsweise hat die mit dem Motor operativ verbundene Antriebsscheibe einen kleineren Durchmesser als die operativ mit der Schwungmasse verbundene Antriebsscheibe.

Gemäss einer besonders bevorzugten Ausführungsform befindet sich der Antrieb in einem einstückigen Gussteil.

Vorzugsweise ist der Motor des Antriebs in einem für den Motor vorgesehenen Kompartiment des einstückigen Gussteils fest angeordnet und kann sich weder während des Betriebs noch während der Riemenspannung bewegen. Somit wird der Schwerpunkt eines Plansichters, der mit dem in einem einstückigen Gusssteil angeordneten erfindungsgemässen Antrieb versehen ist, durch den Motor nicht beeinflusst. Auch der Rundlauf der Maschine als auch die gleichmässige Verteilung der Kräfte auf Befestigungselemente des Plansichters, beispielsweise, Stäbe kann besser garantiert werden.

Gemäss einer besonders bevorzugten Ausführungsform weist das einstückiges Gusssteil ein Kompartiment zur Aufnahme des Antriebs, Einheiten zur Befestigung von Stäben eines Plansichters oder einer vergleichbaren Sortiermaschine zum Sichten beziehungsweise Sieben von mehlförmigen oder granularen Produkten, ein Kompartiment zur Aufnahme des Motors des Antriebs sowie Einheiten zur Befestigung des Siebmoduls eines Plansichters oder einer vergleichbaren Sortiermaschine zum Sichten beziehungsweise Sieben von mehlförmigen oder granularen Produkten auf.

Die Einheiten zur Befestigung der Stäbe können hierbei wie vorstehend beschrieben sein. Besonders bevorzugt ist das einstückige Gusssteil viereckig, insbesondere quadratisch, und die Einheiten zur Befestigung der Stäbe sind an den Ecken des Oberteils hervorstehend angebracht, in Form von Stegen, welche sich von den Ecken des Oberteils und Unterteils des Gerüsts vorzugsweise unter einem Winkel von 30-60°, bevorzugt 45° nach aussen erstrecken.

Das Kompartiment zur Aufnahme des Antriebs ist vorzugsweise eine Aussparung in dem einstückigen Gusssteil, welche entsprechende Teile des Antriebs aufnehmen kann. Im Fall des erfindungsgemässen Antriebs ist das Kompartiment zur Aufnahme einer Antriebsscheibe und einer operativ mit der Antriebsscheibe verbundenen Schwungmasse vorgesehen. Das Kompartiment ist in diesem Fall vorzugsweise eine im Wesentlichen kreisförmige Aussparung mit an die Dimensionen der Antriebsscheibe und damit verbundenen Schwungmasse angepasster Grösse.

In dieser Aussparung, vorzugsweise im Zentrum derselben, ist eine Öffnung vorgesehen, damit Produkt in das unter dem Oberteil des Gerüsts angeordnete Siebmodul gelangen kann.

Weiterhin weist das einstückige Gusssteil bevorzugt ein Kompartiment zur Aufnahme eines Motors des Antriebs auf, wie vorstehend beschrieben. Auf diese Weise kann der Motor fixiert werden, sodass der Motor keinen Einfluss auf den Schwerpunkt der Vorrichtung ausübt. Besonders bevorzugt handelt es sich bei diesem Kompartiment um eine ringförmige Einheit, welche den Motor aufnehmen kann. Insbesondere bevorzugt ist dieses Kompartiment exzentrisch am einstückigen Gusssteil angeordnet.

Die Einheiten zur Befestigung des Siebmoduls können wie vorstehend beschrieben sein.

Eine der Antriebsscheiben ist vorzugsweise unterhalb des Motors angeordnet und operativ mit dem Motor verbunden. Die operative Verbindung kann auf bekannte Art erfolgen.

Eine weitere Antriebsscheibe ist operativ mit der Schwungmasse verbunden. Die operative Verbindung kann auf bekannte Art erfolgen. Diese weitere Antriebsscheibe hat vorzugsweise einen grösseren Durchmesser als die operativ mit dem Motor verbundene Antriebsscheibe.

Der Antriebsscheiben sind über einen Antriebsriemen miteinander verbunden. Wenn durch den Motor die eine Antriebsscheibe in eine Rotationsbewegung versetzt wird, wird der um diese Antriebsscheibe geführte Antriebsriemen in Bewegung versetzt und versetzt seinerseits die andere Antriebsscheibe, um welche der Antriebsriemen ebenfalls geführt ist, in eine Rotationsbewegung. Die rotierende andere Antriebsscheibe ist operativ mit einer Schwungmasse verbunden und versetzt die Schwungmasse ebenfalls in eine Rotationsbewegung. Dadurch wird ein Plansichter, der mit dem in einem einstückigen Gusssteil angeordneten erfindungsgemässen Antrieb versehen ist, in eine schwingende Bewegung versetzt, welche für das Sieben von Material im Siebmodul erforderlich ist.

Die vorliegende Erfindung betrifft weiterhin einen Plansichter zum Sichten beziehungsweise Sieben von mehlförmigen oder granularen Produkten, umfassend mindestens ein Siebmodul, in welchem mehrere Siebe angeordnet sind, wobei ein Produkteinlass im Deckel des Siebmoduls und ein Produktauslass im Boden des Siebmoduls angeordnet ist, und wobei der Plansichter ein Gerüst umfasst, welches ein Oberteil und ein Unterteil aufweist, die mit Stäben verbunden sind, wobei das Oberteil des Gerüsts mit dem Siebmodul verbunden ist, dadurch gekennzeichnet, dass auf dem Deckel des Siebmoduls ein erfindungsgemässer Antrieb angeordnet ist, mit welchem das Siebmodul in eine schwingende Bewegung versetzt werden kann.

Der erfindungsgemässe Plansichter zeichnet sich dadurch aus, dass das Siebmodul nicht aufgehängt ist, sondern auf den Stäben eines Gerüsts steht. Dies ermöglicht eine platzsparende Ausgestaltung des erfindungsgemässen Plansichters, welcher zudem noch leichter ist als bekannte Plansichter.

Das Gerüst für den erfindungsgemässen Plansichter umfasst ein Oberteil und ein Unterteil, wobei das Oberteil des Gerüsts mit dem Siebmodul verbunden ist. Oberteil und Unterteil des Gerüsts sind mit Stäben verbunden. Vorzugsweise sind das Oberteil und Unterteil des Gerüsts im Wesentlichen viereckig.

Gemäss einer bevorzugten Ausführungsform der vorliegenden Erfindung weisen das Oberteil und Unterteil des Gerüsts an den Ecken Einheiten zur Befestigung von Stäben auf. Es kann sich hierbei um Einheiten handeln, an oder in welchen Stäbe fest angebracht werden können, wobei eine lösbare Befestigung (beispielsweise über Schrauben) bevorzugt ist. Diese Einheiten können an den Ecken des Oberteils und Unterteils des Gerüsts hervorstehend angebracht sein, beispielsweise in Form von Stegen, welche sich von den Ecken des Oberteils und Unterteils des Gerüsts vorzugsweise unter einem Winkel von 30-60°, bevorzugt 45° nach aussen erstrecken.

Besonders bevorzugt weist das Gerüst vier Stäbe auf, welche an den Ecken der viereckigen Oberteile und Unterteile des Gerüsts angeordnet sind.

Die Stäbe haben eine ausreichende Länge, dass ein Siebmodul in dem Bereich zwischen Oberteil und Unterteil des Gerüsts (im verbundenen Zustand) angeordnet werden kann.

Das Gerüst ist aus einem geeigneten Material, gefertigt, vorzugsweise einem Metall, besonders bevorzugt rostfreiem Stahl.

Im Unterteil des Gerüsts ist mindestens eine Öffnung vorhanden, um aus dem Siebmodul austretendes Modul durch das Gerüst heraus weg befördern zu können. Vorzugsweise sind mehrere Öffnungen, beispielsweise 2 bis 12 Öffnungen, bevorzugt 2 bis 8 Öffnungen, im Unterteil des Gerüsts vorhanden. Besonders bevorzugt sind 8 Öffnungen im Unterteil des Gerüsts vorhanden, welche an den Ecken eines um das Zentrum des Unterteils herum gedanklich angeordneten Achtecks angeordnet sind.

Das Oberteil des Gerüsts weist Einheiten zur Befestigung des Siebmoduls auf. Das am Oberteil des Gerüsts befestigte Siebmodul steht somit auf den Stäben, welche am Oberteil des Gerüsts befestigt sind. Erfindungsgemäss kann jede herkömmliche Art von Befestigung zwischen Oberteil des Gerüsts und Siebmodul verwendet werden, welche eine auch während des Betriebes des Plansichters zuverlässige Befestigung des Siebmoduls am Gerüst gewährleistet. Lösbare Befestigungsmittel sind bevorzugt. Beispielhaft seien Schraubverbindungen erwähnt.

Gemäss einer besonders bevorzugten Ausführungsform der vorliegenden Erfindung ist das Oberteil des Gerüsts ein einstückiges Gusssteil, in welchem der erfindungsgemässe Antrieb angeordnet ist, wobei das einstückige Gusssteil vorzugsweise ein Kompartiment zur Aufnahme des Antriebs, Einheiten zur Befestigung von Stäben eines Plansichters oder einer vergleichbaren Sortiermaschine zum Sichten beziehungsweise Sieben von mehlförmigen oder granularen Produkten, ein Kompartiment zur Aufnahme des Motors des Antriebs sowie Einheiten zur Befestigung des Siebmoduls eines Plansichters oder einer vergleichbaren Sortiermaschine zum Sichten beziehungsweise Sieben von mehlförmigen oder granularen Produkten umfasst.

Die Einheiten zur Befestigung der Stäbe können hierbei wie vorstehend beschrieben sein. Besonders bevorzugt ist das einstückige Gusssteil viereckig, insbesondere quadratisch, und die Einheiten zur Befestigung der Stäbe sind an den Ecken des Oberteils hervorstehend angebracht, in Form von Stegen, welche sich von den Ecken des Oberteils und Unterteils des Gerüsts vorzugsweise unter einem Winkel von 30-60°, bevorzugt 45° nach aussen erstrecken.

Das Kompartiment zur Aufnahme des Antriebs ist vorzugsweise eine Aussparung in dem einstückigen Gusssteil, welche entsprechende Teile des Antriebs aufnehmen kann. Im Fall des erfindungsgemässen Antriebs ist das Kompartiment zur Aufnahme einer Antriebsscheibe und einer operativ mit der Antriebsscheibe verbundenen Schwungmasse vorgesehen. Das Kompartiment ist in diesem Fall vorzugsweise eine im Wesentlichen kreisförmige Aussparung mit an die Dimensionen der Antriebsscheibe und damit verbundenen Schwungmasse angepasster Grösse.

In dieser Aussparung, vorzugsweise im Zentrum derselben, ist eine Öffnung vorgesehen, damit Produkt in das unter dem Oberteil des Gerüsts angeordnete Siebmodul gelangen kann.

Weiterhin weist das einstückige Gusssteil bevorzugt ein Kompartiment zur Aufnahme eines Motors des Antriebs auf, wie vorstehend beschrieben. Auf diese Weise kann der Motor fixiert werden, sodass der Motor keinen Einfluss auf den Schwerpunkt der Vorrichtung ausübt. Besonders bevorzugt handelt es sich bei diesem Kompartiment um eine ringförmige Einheit, welche den Motor aufnehmen kann. Insbesondere bevorzugt ist dieses Kompartiment exzentrisch am einstückigen Gusssteil angeordnet.

Die Einheiten zur Befestigung des Siebmoduls können wie vorstehend beschrieben sein.

Gemäss einer weiteren bevorzugten Ausführungsform der vorliegenden Erfindung weist das Gerüst weiterhin eine Klammer auf, welche an mindestens zwei Punkten des Unterteils des Gerüsts angeordnet ist und sich über das Oberteil des Gerüsts erstreckt, wobei im oberen Bereich der Klammer eine Öffnung für eine Produktzuführung bereitgestellt ist. Diese Klammer dient zur Fixierung einer Produktzuführung, beispielsweise eines Rohrs, an dem Gerüst.

Die Klammer kann aus einem geeigneten Material gefertigt sein, vorzugsweise einem Metall, besonders bevorzugt rostfreiem Stahl. Die Klammer ist am Unterteil des Gerüsts auf geeignete und bekannte Weise befestigt, bevorzugt lösbar befestigt, beispielsweise durch Schraubverbindungen. Bevorzugt ist die Klammer mittig an zwei gegenüberliegenden Seiten des Unterteils des Gerüsts befestigt. Die Klammer erstreckt sich im montierten Zustand seitlich über die gesamte Höhe des Gerüsts. Die Öffnung für eine Produktzuführung befindet sich über dem Oberteil des Gerüsts, vorzugsweise über der Mitte des Oberteils des Gerüsts, wo gemäss einer bevorzugten Ausführungsform auch die Öffnung für die Produktzufuhr vorgesehen ist, besonders bevorzugt im Zentrum der Aussparung zur Aufnahme des Antriebs.

Das Gerüst dient zur Anordnung eines Siebmoduls. Erfindungsgemäss kann jedes bekannte Siebmodul verwendet werden. Bevorzugt sind Siebmodule mit einer verschliessbaren Öffnung in einer Seitenfläche, beispielsweise einer Tür.

Gemäss der vorliegenden Erfindung ist der Antrieb auf dem Deckel des Siebmoduls angeordnet. Erfindungsgemäss umfasst dies sowohl eine Anordnung des Antriebs direkt auf dem Deckel des Siebmoduls, als auch eine Anordnung des Antriebs im Oberteil des Gerüsts, welches wiederum auf dem Deckel des Siebmoduls angeordnet ist. Die letztere Variante ist erfindungsgemäss bevorzugt. Insbesondere bevorzugt ist die vorstehend beschriebene Ausführungsform, in welcher das Oberteil des Gerüsts ein Kompartiment zur Aufnahme eines Antriebs aufweist. Bei dieser Ausführungsform befindet sich der Antrieb im Kompartiment des entsprechenden Oberteils des Gerüsts.

Durch diese Anordnung der Antrieb auf dem Siebmodul kann auch eine ungerade Anzahl an Siebmodulen betrieben werden.

Der erfindungsgemässe Plansichter ist aus Hygiene-Gesichtspunkten vorteilhaft gegenüber anderen Kleinplansichtern aus dem Stand der Technik. Zudem sind die Herstellungskosten des erfindungsgemässen Plansichtern gegenüber bekannten Plansichtern geringer.

Erfindungsgemäss kann der Plansichter mehrere Siebmodule, vorzugsweise 2 bis 12 Siebmodule, umfassen, die alle synchron betrieben werden können.

Die vorliegende Erfindung wird nachstehend anhand von nicht einschränkenden Ausführungsbeispielen und Zeichnungen näher erläutert. Es zeigen:
- Fig. 1: eine schematische Ansicht einer Ausführungsform des erfindungsgemässen Plansichters
- Fig. 2: eine schematische Ansicht einer Ausführungsform des Oberteils des Gerüsts des Plansichters gemäss Fig. 1 in Form eines einstückigen Gussteils
- Fig. 3: eine schematische Ansicht einer Ausführungsform des erfindungsgemässen Antriebs im Oberteil des Gerüsts gemäss der in Fig. 2 gezeigten Ausführungsform
- Fig. 4: eine schematische Ansicht eines Ausschnitts der Ausführungsform des erfindungsgemässen gemäss Fig. 3
- Fig. 5: eine Seitenansicht der Ausführungsform gemäss Fig. 3.

Gleiche Bezugszeichen in den verschiedenen Figuren bezeichnen dieselben Elemente.

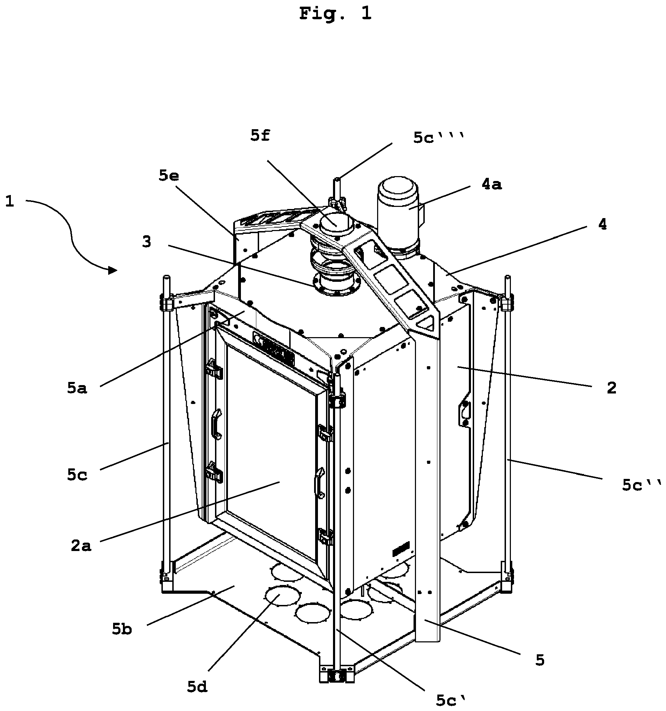

In Fig. 1 ist eine schematische Ansicht einer Ausführungsform des erfindungsgemässen Plansichters 1 gezeigt. Der Plansichter 1 umfasst ein Siebmodul 2, welches in diesem Beispiel in einer Seitenfläche eine Öffnung, hier in Form einer Tür 2a, aufweist.

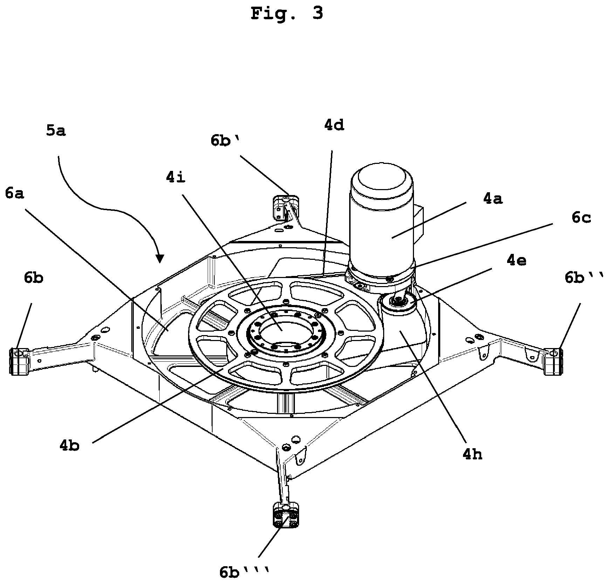

Ein Produkteinlass 3 gestattet das Einführen zu siebenden Materials in das Siebmodul 2. Ein (hier nicht gezeigter) Produktauslass ist im Boden des Siebmoduls 2 angeordnet. Auf dem Deckel des Siebmoduls 2 ist ein Antrieb 4 angeordnet. Wie nachstehend in Fig. 3 näher dargestellt ist der Antrieb 4 im Oberteil 5a des Gerüsts 5 angeordnet. Das Gerüst 5 umfasst weiterhin ein Unterteil 5c mit darin angeordneten Öffnungen 5d (hier 8 Öffnungen auf einem gedachten Achteck um das Zentrum des Unterteils 5b). Das Unterteil 5b und das Oberteil 5a des Gerüsts 5 sind über Stäbe 5c, 5c', 5c", 5c''' miteinander verbunden.

Weiterhin umfasst das Gerüst 5 eine Klammer 5e, welche in der Mitte von gegenüberliegenden Seiten des Unterteils 5b angeordnet sind. Die Klammer 5e erstreckt sich über die gesamte Höhe des Plansichters und oberhalb des Oberteils 5a des Gerüsts 5. Die Klammer 5e weist im Bereich oberhalb des Oberteils 5a des Gerüsts 5 eine Öffnung 5f auf, durch welche eine Produktzuführleitung (nicht gezeigt) geführt werden kann.

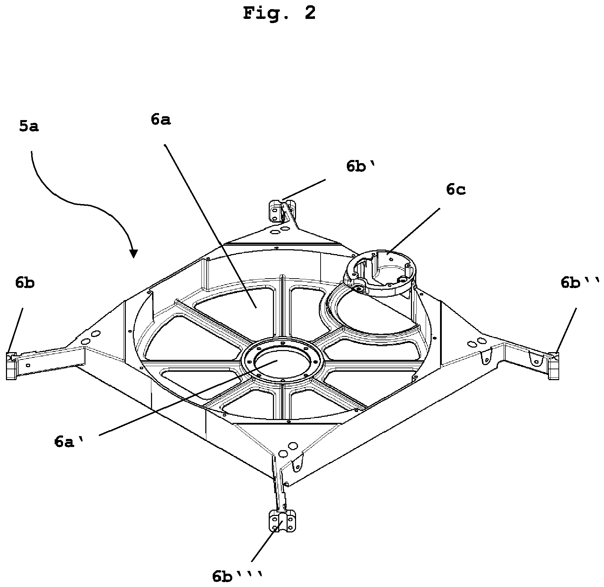

In Fig. 2 ist eine schematische Ansicht einer Ausführungsform des Oberteils 5a des Gerüsts 5 in Form eines einstückigen Gussteils gezeigt. Das Oberteil 5a umfasst ein Kompartiment 6a zur Aufnahme des Antriebs 4 (vgl. Fig. 3), Einheiten 6b, 6b', 6b", 6b'" zur Befestigung der Stäbe 5c, 5c', 5c", 5c''' (vgl. Fig. 1), ein Kompartiment 6c zur Aufnahme eines Motors 4a (vgl. Fig. 3) des Antriebs 4 sowie Einheiten 6d, 6d' zur Befestigung des Siebmoduls 2 (vgl. Fig. 1). Kompartment 6a ist im Wesentlichen kreisförmig. In der Mitte des Kompartments 6a ist eine Öffnung 6a' vorgesehen, durch welche Produkt in ein darunter angeordnetes Siebmodul 2 (nicht gezeigt) geleitet werden kann. An den Ecken des Oberteils 5a sind Stege angeordnet, welche sich in einem Winkel von etwa 45° vom Oberteil 5a weg erstrecken und an ihren Enden Einheiten 6b, 6b', 6b", 6b'" zur Befestigung der Stäbe 5c, 5c', 5c", 5c''' (vgl. Fig. 1) aufweisen. Kompartment 6c ist ringförmig und dient zur Befestigung eines Motors 4a (vgl. Fig. 3).

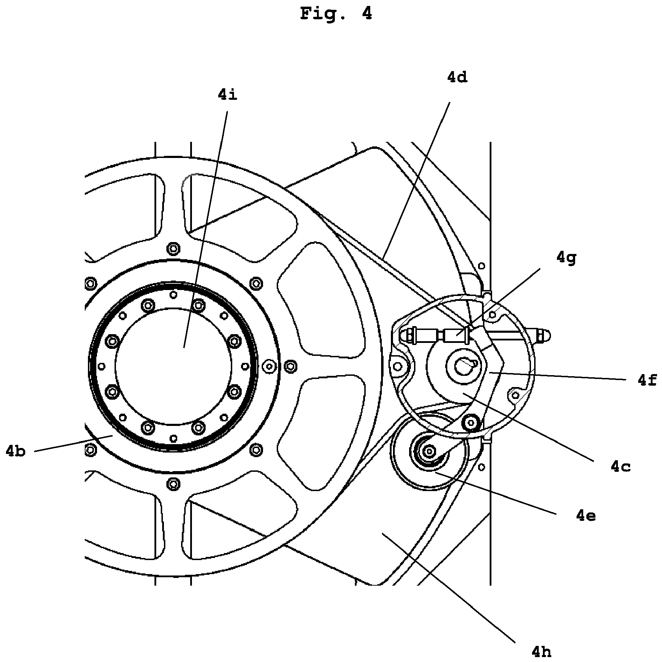

In Fig. 3 ist eine schematische Ansicht einer Ausführungsform der erfindungsgemässen Antriebs 4 im Oberteil 5a des Gerüsts 5 gemäss der in Fig. 2 gezeigten Ausführungsform gezeigt. Ein Motor 4a ist im Kompartment 6c befestigt. Unter dem Motor 4a ist eine Antriebsscheibe 4c (hier nicht erkennbar, vgl. Fig. 4) angeordnet, welche vom Motor 4a in Rotationsbewegung versetzt werden kann. Im Kompartment 6a ist eine zweite Antriebsscheibe 4b mit grösserem Durchmesser als der Antriebsscheibe 4c angeordnet. Diese Antriebsscheibe 4b weist in ihrer Mitte eine Öffnung 4i auf, durch welche Produkt in ein darunter angeordnetes Siebmodul 2 (nicht gezeigt) geleitet werden kann. Der Antriebsscheiben 4b und 4c sind über einen Antriebsriemen 4d miteinander verbunden, sodass eine Rotation der Antriebsscheibe 4c zu einer Rotation der Antriebsscheibe 4b führt. Durch die Rotation der Antriebsscheibe 4b wird eine Schwungmasse 4h in Bewegung versetzt, welche operativ mit der Antriebsscheibe 4b verbunden ist. Die selbstspannende Spannrolle 4e, 4f, 4g wird nachstehend mit Bezug auf Fig. 4 näher beschrieben.

In Fig. 4 ist ein Ausschnitt der schematischen Ansicht einer Ausführungsform der erfindungsgemässen Antrieb 4 mit selbstspannender Spannrolle 4e, 4f, 4g gemäss Fig. 3 gezeigt. Der Antriebsriemen 4d wird, nachdem er den Kontakt mit der Antriebsscheibe 4b verloren hat, entlang einer Spannrolle 4e geführt, bevor er in Kontakt mit der Antriebsscheibe 4c kommt. Auf diese Weise wird ein Über- oder Unterspannen des Antriebsriemens 4d verhindert. Vorzugsweise wird eine Federspannung verwendet. Die Spannrolle 4e ist über einen Hebel 4f mit einer Spannfeder 4g verbunden, wodurch die Spannrolle 4e in Position gehalten wird bzw. selbstspannend ist. Durch die Spannrolle 4e kann weiterhin der Umschlingungswinkel der kleinen Antriebsscheibe 4c erhöht werden.

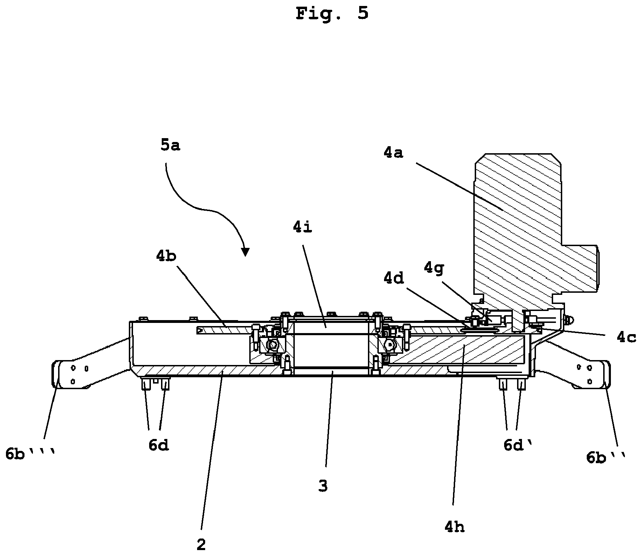

In Fig. 5 ist eine Seitenansicht der Ausführungsform gemäss Fig. 3 gezeigt. In Fig. 5 sind die Einheiten 6d, 6d' zur Befestigung des Siebmoduls 2 an dem Oberteil 5a zu erkennen. In Fig. 5 ist zu erkennen, dass Produkt durch die Mitte des Oberteils 5a geführt werden kann. Die Öffnung 4i in der Mitte der Antriebsscheibe 4b ist oberhalb des Produkteinlasses 3 im Deckel des Siebmoduls 2 angeordnet. Somit ist ein Weg bereitgestellt, durch welchen Produkt in das Siebmodul 2 gelangen kann.

## Patentansprüche

1. Antrieb (4) für einen Plansichter oder eine vergleichbare Sortiermaschine zum Sichten beziehungsweise Sieben von mehlförmigen oder granularen Produkten, umfassend einen Motor (4a) sowie zwei Antriebsscheiben (4b, 4c), wobei der Motor (4a) operativ mit einer Antriebsscheibe (4c) verbunden ist, eine Antriebsscheibe (4b) operativ mit einer Schwungmasse (4h) verbunden ist, und die Antriebsscheiben (4b, 4c) über einen Antriebsriemen (4d) operativ miteinander verbunden sind, **dadurch gekennzeichnet, dass** der Antrieb (4) weiterhin eine selbstspannende Spannrolle (4e, 4f, 4g) zum Spannen des Antriebsriemens (4d) umfasst.

2. Antrieb (4) nach Anspruch 1, **dadurch gekennzeichnet, dass** die selbstspannende Spannrolle (4e, 4f, 4g) einen Hebel (4f) mit einer Spannfeder (4g) umfasst.

3. Antrieb (4) nach einem der vorhergehenden Ansprüche, **dadurch gekennzeichnet, dass** durch den Antrieb (4) eine Zuführung für zu sichtendes Produkt geführt ist.

4. Antrieb (4) nach Anspruch 3, **dadurch gekennzeichnet, dass** die Zuführung für zu sichtendes Produkt durch eine Öffnung (4i) in der Mitte der Antriebsscheibe (4b) erfolgt.

5. Antrieb (4) nach einem der vorhergehenden Ansprüche, **dadurch gekennzeichnet, dass** die mit dem Motor (4a) operativ verbundene Antriebsscheibe (4c) einen kleineren Durchmesser hat als die operativ mit der Schwungmasse (4h) verbundene Antriebsscheibe (4b).

6. Antrieb (4) nach einem der vorhergehenden Ansprüche, **dadurch gekennzeichnet, dass** der Antrieb (4) in einem einstückigen Gusssteil angeordnet ist.

7. Antrieb (4) nach einem der vorhergehenden Ansprüche, **dadurch gekennzeichnet, dass** das einstückiges Gusssteil ein Kompartiment (6a) zur Aufnahme des Antriebs (4), Einheiten (6b, 6b', 6b", 6b"') zur Befestigung von Stäben (5c, 5c', 5c", 5c''') eines Plansichters oder einer vergleichbaren Sortiermaschine zum Sichten beziehungsweise Sieben von mehlförmigen oder granularen Produkten, ein Kompartiment (6c) zur Aufnahme des Motors (4a) des Antriebs (4) sowie Einheiten (6d, 6d') zur Befestigung des Siebmoduls (2) eines Plansichters oder einer vergleichbaren Sortiermaschine zum Sichten beziehungsweise Sieben von mehlförmigen oder granularen Produkten umfasst.

8. Plansichter (1) zum Sichten beziehungsweise Sieben von mehlförmigen oder granularen Produkten, umfassend mindestens ein Siebmodul (2), in welchem mehrere Siebe angeordnet sind, wobei ein Produkteinlass (3) im Deckel des Siebmoduls (2) und ein Produktauslass im Boden des Siebmoduls (2) angeordnet ist, und wobei der Plansichter (1) ein Gerüst (5) umfasst, welches ein Oberteil (5a) und ein Unterteil (5b) aufweist, die mit Stäben (5c, 5c', 5c", 5c''') verbunden sind, wobei das Oberteil (5a) des Gerüsts (5) mit dem Siebmodul (2) verbunden ist, **dadurch gekennzeichnet, dass** auf dem Deckel des Siebmoduls (2) ein Antrieb (4) gemäss einem der Ansprüche 1 bis 7 angeordnet ist, mit welchem das Siebmodul (2) in eine schwingende Bewegung versetzt werden kann.

9. Plansichter (1) nach Anspruch 8, **dadurch gekennzeichnet, dass** das Oberteil (5a) des Gerüsts (5) ein einstückiges Gusssteil ist, in welchem der Antrieb (4) angeordnet ist, wobei das einstückige Gusssteil vorzugsweise ein Kompartiment (6a) zur Aufnahme des Antriebs (4), Einheiten (6b, 6b', 6b", 6b"') zur Befestigung von Stäben (5c, 5c', 5c", 5c''') eines Plansichters oder einer vergleichbaren Sortiermaschine zum Sichten beziehungsweise Sieben von mehlförmigen oder granularen Produkten, ein Kompartiment (6c) zur Aufnahme des Motors (4a) des Antriebs (4) sowie Einheiten (6d, 6d') zur Befestigung des Siebmoduls (2) eines Plansichters oder einer vergleichbaren Sortiermaschine zum Sichten beziehungsweise Sieben von mehlförmigen oder granularen Produkten umfasst.

10. Plansichter (1) nach einem der Ansprüche 8 bis 9, **dadurch gekennzeichnet, dass** im Unterteil (5b) des Gerüsts (5) mindestens eine Öffnung (5d) vorhanden ist.

11. Plansichter (1) nach einem der Ansprüche 8 bis 10, **dadurch gekennzeichnet, dass** das Gerüst (5) weiterhin eine Klammer (5e) aufweist, welche an mindestens zwei Punkten des Unterteils (5b) des Gerüsts (5) angeordnet ist und sich über das Oberteil (5a) des Gerüsts (5) erstreckt, wobei im oberen Bereich der Klammer (5e) eine Öffnung (5f) für eine Produktzuführung bereitgestellt ist.

12. Plansichter (1) nach einem der Ansprüche 8 bis 11, **dadurch gekennzeichnet, dass** die Zuführung für zu sichtendes Produkt durch den Antrieb (4) geführt ist, vorzugsweise durch eine Öffnung (4i) in der Mitte der Antriebsscheibe (4b).

13. Plansichter (1) nach Anspruch 12, **dadurch gekennzeichnet, dass** die Öffnung (4i) in der Mitte der Antriebsscheibe (4b) oberhalb des Produkteinlasses (3) im Deckel des Siebmoduls (2) angeordnet ist.

14. Plansichter (1) nach einem der Ansprüche 8 bis 13, **dadurch gekennzeichnet, dass** die Zuführung für zu sichtendes Produkt durch eine Öffnung (5f) im oberen Bereich der Klammer (5e) des Gerüsts (5) zur Öffnung (4i) in der Mitte der Antriebsscheibe (4b) bis zum Produkteinlass (3) im Deckel des Siebmoduls (2) vorgesehen ist.

15. Plansichter (1) nach einem der Ansprüche 8 bis 14, **dadurch gekennzeichnet, dass** das Siebmodul (2) eine verschliessbare Öffnung (2a) in einer Seitenwand aufweist.
